# EUROPEAN PATENT SPECIFICATION

(11) **EP 1 738 447 B1**
(45) Date of publication and mention of the grant of the patent: **10.12.2008**
(21) Application number: 05730184.8
(22) Date of filing: 18.03.2005
(51) Int. Cl.: H02G 1/08

(54) **METHOD AND DEVICE FOR PULLING CABLES AND SIMILAR THROUGH FLEXIBLE TUBES**
VERFAHREN UND EINRICHTUNG ZUM ZIEHEN VON KABELN UND ÄHNLICHEM DURCH FLEXIBLE RÖHREN
PROCEDE ET DISPOSITIF DE TRACTION DE CABLES A TRAVERS DES CONDUITES SOUPLES

(30) Priority: 24.03.2004 NO 20041245
(43) Date of publication of application: 03.01.2007
(73) Proprietor: Inventor AS, N-6650 Surnadal (NO)
(72) Inventor: AASGAARD, Tormod, / (NO)
(74) Representative: Khan, Mohammed Saiful Azam
(86) International application number: PCT/NO2005/000094
(87) International publication number: WO 2005/091455

(56) References cited:
- EP-A2- 0 828 327
- DE-U1- 29 610 953

## Description

The invention relates to a method and a device for pulling cables and similar through flexible pipes, as described in the preamble of claim 1, and respectively in claim 2.

### Background

There is a need for pulling cables through plastic tubes for use in electrical installations (electrical cable conduits). Cables here mean all forms of insulated electrical conductors, either with one or more single conductors, or cables with a multiple conductors.

There is for example known to pull cables like this into corrugated, coilable plastic tubes, e.g. having a diameter of 16 and 22 mm and lengths of 50 and 100m.

It is also known to blow a draw string through the tube, and then pull the cables through the tube by this.

It is also known to blow cables through plastic tubes which are straightened out.

Documents DE-U1-29610953 and EP-A-0828327 illustrate the prior art.

The common disadvantage of the known methods is that they are time-consuming and thereby expensive. Also, there are limits to the length of plastic tube through which cables can be pulled in and for the last method the number of cables which can be inserted into one tube is limited.

### Object

The main object of the invention is to provide a method and a device which makes the insertion of cables more rapid, and which makes it possible to pull a plurality of cables in one tube and/or increase the length of the tube which is to be provided with cables. It is a particular object to provide a device which can be operated by a single operator, with the least possible work.

Such a device must require little space, at least regards to volume, so that it does not occupy valuable space.

It is also important that the device requires little maintenance, and is little exposed to damage and shut-down. It is important, with regard to the co-ordination of the cable pulling and the packing of the finished product, which preferably should be performed with the least possible intermediate storage.

### The invention

The method according to the invention is described in claim 1. This arrangement has shown to be suitable both in regard to the capacity of the insertion, and the speed.

In claim 2, described is a device for carrying out the method of claim 1. This device can be made simple in construction, and requires a plain control system, which again makes the construction sturdy and reduces the need for maintenance, replacement due to wear and tear, and stoppages due to failure or damages.

Further features of the invention are more closely described in claims 3-6. Particularly advantageous is the possiblilty to pull out the plastic tube by means of a hose as described in claim 5.

### Example

The invention below is more closely described with reference to the drawings, wherein
Figure 1 shows a schematic side view of an embodiment of a device according to the invention, shown in the initial phase for insertion of a dragline into the plastic tube,
Figure 2 schematically shows an enlarged section of Figure 1, and
Figure 3 schematically shows a cut through a pull wagon with an example of a driving device.

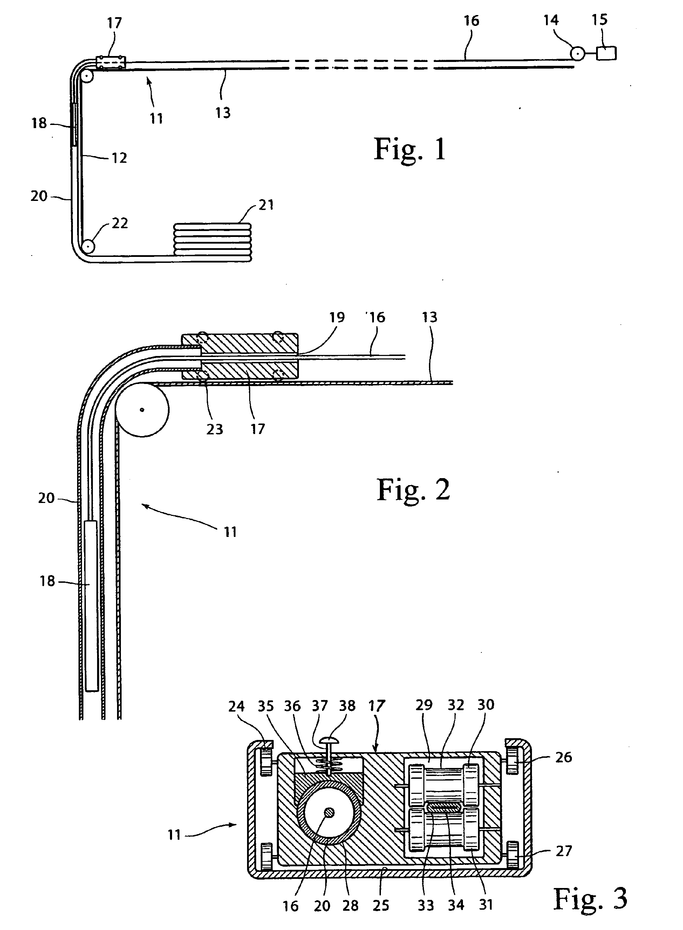

In Figure 1, shown is a side view of an embodiment of a device according to the invention. The base for the device is a guidance track 11 with a first generally vertical inlet part 12, and a following generally horizontal pullout part 13, for pulling out a length of the plastic tube which is to be provided with one or more cables. The guidance track can be for example 50 or 100 meters long, and can be placed below the ceiling of a storehouse or another building, without occupying substantial useful space.

At the distant end of the guidance track 11, arranged is a winch drum 14 powered by a motor 15. The winch drum 14 contains a line 16, e.g. of monofilament nylon or another strong, smooth and flexible plastic line, e.g. with a diameter of 2.5 mm.

In the initial phase for the device, the line 16 is guided forward to the lower edge of the generally vertical inlet part 12 of the guidance track 11. It is guided through a pull wagon or pulling unit 17, which in Figure 1, is shown in an initial position at the end of the inlet part 12. The pull wagon 17 will now be more closely described.
It can be pulled along the pullout part 13 of the guidance track, forward to the winch drum 14, e.g. by a wire, chain or by a motor driven driving wheel. An advantageous embodiment of a pull wagon will be described below.

In Figure 2, further details of the pull wagon 17 and the end of the line 16 is shown. At the free end, i.e. in the generally vertical inlet part 12 of the guidance track 11, the line 16 is connected to a bar-shaped metal weight 18.

The pull wagon 17 has an opening 19, arranged for insertion of the line 16, and at the end of the pull wagon 17, which is facing the inlet part of the guidance track 11, the opening is arranged to grab the end of a plastic tube 20 which can be pulled off a tube spool 21, over a feed wheel 22. The pull wagon 17 is shown with a wheel 23, which can roll against the guidance track 11.

The first step of the method, according to the invention, includes the pull wagon 17 pulling the end of the tube 20 towards the winch drum 14. Thus, the plastic tube 20 is pulled out along the guidance track 11, in the whole length thereof. If the size of the tube spool 21 is adapted to the length of the tube which is to be provided with a cable, the rear end of the plastic tube 20, in the pulled out condition, will be positioned in the inlet part 12 of the guidance track. In this process, the weight 18 will pull the line 16 into the plastic tube 20, when this is pulled out along the guidance track 11, so that the weight 18 ends up hanging out of the rear end of the plastic tube 20. The corresponding result can be obtained if the plastic tube 20 is pulled off a larger spool, and cut with a cutting mechanism.

The next step of the method includes the cables, or those cables to be pulled into the plastic tube 20, attached to the end of the line 16, and the motor 15 is started for winding in the line 16, and the cable or cables. When the winding is done, the finished plastic tube 20, provided with cables, is wound up and pulled out of the guidance track 11 with suitable gear. At the same time, the line 16 is pulled back from the winch drum 14 to the inlet part 12 of the guidance track.

In Figure 3, shown is a section through an embodiment of a pull wagon 17, arranged in a guidance track 11, which is adapted to this embodiment. The guidance track 11 is manufactured in a C-profile with edge flanges 24, so that the edge flanges 24 and the bottom 25 of the guidance track forms capture track for four pairs of wheels 26, 27, arranged at the corners of a box-shaped pull wagon 17.

Adjacent to the opening 28 of the plastic tube 20 and the line 16, the pull wagon 17 has an opening 29 for a pair of clamp rollers 30, 31 with circumference tracks 32 which forms a narrow opening 33 for a compressible hose 34. The opening 33 is made so narrow that the hose 34 is completely compressed. The hose 34 expands from the inlet part 12 of the guidance track 11 to the other end of the guidance track. By applying air or hydraulic pressure to the hose 34 from the inlet end, the hose will act as a linear motor, and pull the pull wagon 17 along the guidance track 11. The hose 34 can lie at the bottom 25 of the guidance track 11.

The opening 28 in the pull wagon 17, has a gripper 35 to hold onto the end of the plastic tube 20. The gripper 35 has a curved contact surface against the opening 28, and is pressed against this by a helical spring 36. To be able to pull the gripper 35 manually out of mesh and release the end of the plastic tube 20, it has a pin 37 which extends through the helical spring 36 and up to the surface of the wagon 17, and has a grab head 38 to lift the gripper up.

It is also possible to actuate the mechanical release by a mechanical gripper which catches the grab head 37 in the end position of the wagon 17.

When winding up the finished cabled plastic tube 20, the pull wagon 17 will be pulled back to the inlet part. This presupposes that the hose 34 is released of pressure, and emptied.

For control of this functional process arranged is a control unit for control of the capturing of the plastic tube 20, the control of the motor 15, the applying of pressure to the hose 34, e.g. with an air compressor and valves (not shown) and for control of the rewinding of the cabled plastic tube 20.

## Claims

1. Method for pulling of one or more cables into a flexible tube (20), **characterized in**
- **that** the flexible tube (20) is pulled towards the winch drum (14) along a guidance track (11) which has a first generally vertical section (12),
- **that** a line (16) which runs along the guidance track (11) from a winch (14) at the other end of the guidance track (11), and which is connected to a weight (18) at the free end of the line (16), is arranged with the weight (18) in the tube end in the generally vertical section (12) of the guidance track (11) before the pulling of the flexible tube (20) starts, so that the line (16) is pulled through the tube (20),
- **that** the cable or cables which are to be inserted into the flexible tube (20) then are attached to the free end of the line (16) instead of the weight (18),
- **that** the line (16) with the attached cable or cables is pulled through the flexible tube (20) with the winch (14).

2. Device for pulling one or more cables through a flexible tube, with a guidance track (11) for laying out a flexible tube (20) which one or more cables is to be pulled into, **characterized in**
- **that** the guidance track (11) includes a generally vertical inlet part (12), and a generally horizontal main part (13),
- **that** it includes a pull wagon (17) which can pull the flexible tube (20) along the guidance track (11),
- **that** a winch (14) is arranged at the distant end of the guidance track (11), with a line (16) which is pulled out to the generally vertical inlet part (12) of the guidance track, and which can be wound in,
- **that** a weight (18) is attached to the free end of the line (16), to be inserted into the flexible tube (20) when it is to be pulled out along the guidance track (11).

3. Device according to claim 2, **characterized in that** the pull wagon (17) has a gripper (35) to hold onto the end of the flexible tube (20) during the pulling of it along the guidance track (11).

4. Device according to claim 3, **characterized in that** along the guidance track (11) runs a pulling device to pull the pull wagon (17) from the inlet part (12) to the winch (14).

5. Device according to claim 4, **characterized in that** the pulling device comprises a flexible hose (34) which in the pull wagon (17) is completely compressed by a pair of clamp rollers (30, 31), as the hose (34) can be pressurised with air or a hydraulic medium from at least the end of the hose which is facing the inlet part (12).

6. Device according to any one of the claims 2-5, **characterized in that** the weight (18) is bar-shaped.

## Patentansprüche

1. Verfahren zum Ziehen mindestens eines Kabels in ein flexibles Rohr (20), **dadurch gekennzeichnet,**
- **dass** das flexible Rohr (20) in Richtung einer Windentrommel (14) entlang einer Führungsbahn (11) gezogen wird, die einen ersten grundsätzlich vertikalen Abschnitt (12) besitzt,
- **dass** eine Schnur (16), die von einer Winde (14) an dem anderen Ende der Führungsbahn (11) entlang der Führungsbahn (11) verläuft und die mit einer Masse (18) an dem freien Ende der Schnur (16) verbunden ist, mit der Masse (18) in einem Rohrende in dem grundsätzlich vertikalen Abschnitt (12) der Führungsbahn (11) angeordnet wird, bevor das Ziehen des flexiblen Rohrs (20) beginnt, so dass die Schnur (16) durch das Rohr (20) gezogen wird,
- **dass** das Kabel oder die Kabel, die in das flexible Rohr (20) einzuführen sind, dann anstelle der Masse (18) an dem freien Ende der Schnur (16) befestigt wird oder werden,
- **dass** die Schnur (16) mit dem daran befestigten Kabel oder den Kabeln von der Winde (14) durch das flexible Rohr (20) gezogen wird.

2. Einrichtung zum Ziehen mindestens eines Kabels durch ein flexibles Rohr mit einer Führungsbahn (11) zum Auslegen eines flexiblen Rohrs (20), in welches das mindestens eine Kabel zu ziehen sind, **dadurch gekennzeichnet, dass**
- die Führungsbahn (11) ein grundsätzlich vertikales Einlassteil (12) und ein grundsätzlich horizontales Hauptteil (13) besitzt,
- ein Zugwagen (17) vorgesehen ist, der das flexible Rohr (20) entlang der Führungsbahn (11) ziehen kann,
- eine Winde (14) an dem abgelegenen Ende der Führungsbahn (11) angeordnet ist mit einer Schnur (16), die zu dem grundsätzlich vertikalen Einlassteil (12) der Führungsbahn herausgezogen werden kann und die aufgewickelt oder eingeholt werden kann,
- eine Masse (18) an dem freien Ende der Schnur (16) befestigt ist zum Einsetzen in das flexible Rohr (20), wenn dieses entlang der Führungsbahn (11) gezogen werden soll.

3. Einrichtung nach Anspruch 2, **dadurch gekennzeichnet, dass** der Zugwagen (17) einen Greifer (35) zum Halten des Endes des flexiblen Rohrs (20) während des Ziehens entlang der Führungsbahn (11) besitzt.

4. Einrichtung nach Anspruch 3, **dadurch gekennzeichnet, dass** entlang der Führungsbahn (11) eine Zugeinrichtung läuft zum Ziehen des Zugwagens (17) von dem Einlassteil (12) zu der Winde (14).

5. Einrichtung nach Anspruch 4, **dadurch gekennzeichnet, dass** die Zugeinrichtung einen flexiblen Schlauch (34) besitzt, der in dem Zugwagen (14) durch ein Paar Klemmrollen (30, 31) vollständig zusammengedrückt wird, wobei der Schlauch (34) von dem zumindest einen Ende des Schlauchs, welches dem Einlassteil (12) gegenüberliegt oder benachbart ist, mit Luft oder einem hydraulischen Medium druckbeaufschlagt werden kann.

6. Einrichtung nach einem der Ansprüche 2 bis 5, **dadurch gekennzeichnet, dass** die Masse (18) stangenartig geformt ist.

## Revendications

1. Procédé pour tirer un ou plusieurs câbles dans un tube souple (20), **caractérisé en ce que :**
- le tube souple (20) est tiré vers le tambour de treuil (14) le long d'un rail de guidage (11) qui comporte une première section (12) généralement verticale,
- une ligne (16) qui s'étend le long du rail de guidage (11) d'un treuil (14) à l'autre extrémité du rail de guidage (11), et qui est reliée à un poids (18) à l'extrémité libre de la ligne (16), est agencée avec le poids (18) dans l'extrémité de tube dans la section (12) généralement verticale du rail de guidage (11) avant que la traction du tube souple (20) ne débute, de sorte que la ligne (16) soit tirée à travers le tube (20),
- le câble ou les câbles qui doivent être insérés dans le tube souple (20) sont ensuite fixés à l'extrémité libre de la ligne (16) au lieu du poids (18),
- la ligne (16) à laquelle le câble ou les câbles sont fixés est tirée à travers le tube souple (20) avec le treuil (14).

2. Dispositif pour tirer un ou plusieurs câbles à travers un tube souple, avec un rail de guidage (11) pour disposer un tube souple (20) dans lequel un ou plusieurs câbles doivent être tirés, **caractérisé en ce que**
- le rail de guidage (11) comprend une partie d'entrée (12) généralement verticale, et une partie principale (13) généralement horizontale,
- il comprend un chariot de traction (17) qui peut tirer le tube souple (20) le long du rail de guidage (11),
- un treuil (14) est agencé à l'extrémité distante du rail de guidage (11), avec une ligne (16) qui est tirée vers la partie d'entrée (12) généralement verticale du rail de guidage, et qui peut être enroulée sur celui-ci,
- un poids (18) est fixé à l'extrémité libre de la ligne (16), pour être inséré dans le tube souple (20) lorsqu'il doit être sorti par traction le long du rail de guidage (11).

3. Dispositif selon la revendication 2, **caractérisé en ce que** le chariot de traction (17) comporte un élément de serrage (35) pour maintenir l'extrémité du tube souple (20) pendant sa traction le long du rail de guidage (11).

4. Dispositif selon la revendication 3, **caractérisé en ce qu'**un dispositif de traction s'étend le long du rail de guidage (11) pour tirer le chariot de traction (17) de la partie d'entrée (12) vers le treuil (14).

5. Dispositif selon la revendication 4, **caractérisé en ce que** le dispositif de traction comprend un tuyau souple (34) qui est complètement comprimé dans le chariot de traction par une paire de rouleaux de serrage (30, 31), alors que le tuyau (34) peut être mis sous pression avec de l'air ou avec un milieu hydraulique au moins à partir de l'extrémité du tuyau qui fait face à la partie d'entrée (12).

6. Dispositif selon l'une quelconque des revendications 2 à 5, **caractérisé en ce que** le poids (18) a la forme d'une barre.
